# EUROPEAN PATENT SPECIFICATION

(11) **EP 0 254 506 B1**
(45) Date of publication and mention of the grant of the patent: **14.07.1993**
(21) Application number: 87306368.9
(22) Date of filing: 17.07.1987
(51) Int. Cl.: H05B 39/00

(54) **Circuit to limit surges in dc-operated lamp**
Schaltung zur Begrenzung von Überspannungen in gleichstrombetriebenen Lampen
Circuit pour limiter les surtensions dans des lampes fonctionnant au courant continu

(30) Priority: 19.07.1986 JP 111257/86
(43) Date of publication of application: 27.01.1988
(73) Proprietor: Hayashibara, Ken, Okayama-shi Okayama (JP)
(72) Inventor: Masaki, Kazumi, Suita-shi Osaka (JP)
(74) Representative: Palmer, Roger

(56) References cited:
- DD-A- 138 592
- DE-A- 3 543 573

## Description

The present invention relates to a circuit to limit surges in a dc-operated lamp, for example, initial switch-on surge and arc discharge current.

Conventional starter circuits are effective in limitation of initial switch-on surge in a lamp, but ineffective in limitation of arc that may arise on burnout of filament. The arc discharges in short-circuit manner, and continuously flows a surge of 200 amperes when, for example, 60 watt lamp is operated with dc 130 volts. The surge may cause serious damage to circuit elements such as rectifier and switching means.

FR-A-2574613 discloses apparatus for limiting an arc discharge current in an incandescent lamp which includes a surge limiting resistor and a surge detection resistor connected in series with the incandescent lamp with switching means connected in parallel with the surge limiting resistor. When the lamp is in use and has warmed up the switching means provides a main current path to the lamp parallel to the surge limiting resistor. In the event a filament of the lamp burns out causing an arc across the broken filament, the surge current is detected across the surge detection resistor and causes the actuation of the switching means so that the main current path to the lamp is in series with the surge limiting resistor. This apparatus has the disadvantage that very high speed response components are required for the switching means to effectively prevent damage to components in the circuit if a filament breaks. In addition, the resistor used to limit the discharge current must have a large power capacity in order to supress excessive heat generated by the resistor due to the high currents involved when a filament is broken.

In view of the foregoing, the main object of the present invention is to provide circuit arrangements effective in limitation of both initial switch-on surge and arc discharge current.

This and other objects as may become apparent hereinafter have been attained with the present invention which provides a circuit to limit surges in a dc-operated lamp, comprising: an AC source; a rectifier circuit having smoothing means connected in parallel with its output terminals; surge-limiting means connected in series with said lamp, the series combination of both elements being connected in parallel with the smoothing means; and switching means having the main current path connected in parallel with said surge-limiting means, said switching means becoming conductive after a prescribed period of time long enough to permit the filament of said lamp to warm up, so that the switching means short circuits the surge-limiting means to supply the full output of the rectifier circuit to the lamp characterised in that the input terminals of the rectifier circuit are connected to the AC source through an inductor, said inductor having an impedance sufficient to limit switch-on surges in said smoothing means and also arc discharge currents which may occur when a filament of said lamp burns out.

The present invention will hereinafter be explained with reference to the accompanying drawings in which:
FIG. 1 is the circuit of an embodiment according to the invention; and
FIG. 2 is illustrative of an initial switch-on surge flowing into smoothing means soon after ac source is connected as its peak value.

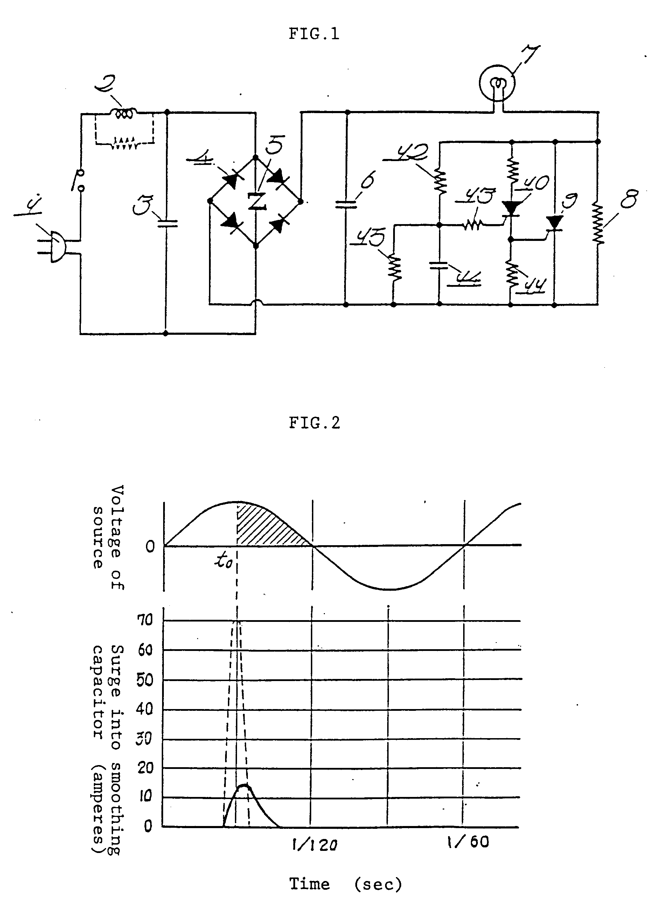

In the embodiment as shown in FIG. 1, the input terminal of rectifier bridge (4) is to be connected with ac source (1) through inductor (2), while the output of the rectifier bridge is smoothed with capacitor (6) and then supplied to lamp (7) through resistor (8) used as the surge-limiting means. Since the filament resistance of lamp (7) is about ten ohms at ambient temperature, energization of dc 130 volts thereto flows an initial switch-on surge of 13 amperes that may burn out the filament. By providing 100 ohm resistor (8) in series to lamp (7) give a total resistance of 110 ohms, the surge is reduced to about 1.2 amperes. Thus, the output of lamp (7) is extremely decreased.

Resistor (8) is connected in parallel with the main current path of the switching means, such as thyristor, that is arranged to become conductive when the filament of lamp (7) is warmed up over a period of a prescribed time. The switching means short-circuits resistor (8) to supply the full output of the rectifier circuit to lamp (7) soon after the filament attains an incandescent state. In this embodiment, thyristor (9) is cascaded to thyristor (10) to form the switching means, and the gate of thyristor (10) is connected through resistor (13) with the time constant circuit consisting of resistor (12) and capacitor (14). By using such cascade, thyristor (9) is triggered with a relatively small current. This is very advantageous to stabilize the operation of the whole circuit. Immediately after ac source (1) is on, the voltage across resistor (8) charges capacitor (14) through resistor (12) connected in parallel with resistor (8). Since, in the embodiment, the voltage across resistor (8) is used to drive the switching means, no special source is required therefor. This is very advantageous to simplify the whole circuit and stabilize its operation. Capacitor (14) is arranged to discharge through resistor (13) in accordance with the time constant as determined together with resistor (12) to the gate of thyristor (10) to trigger it. Immediately after it occurs, the voltage across resistor (11) triggers in turn thyristor (9), and it short-circuits resistor (8) to supply the full output of the rectifier circuit to lamp (7). Thus, by setting the time constant to a length sufficient to warm up the filament, the initial switch-on surge thereinto is effectively limited.

Voltage regulator diode (5) and capacitor (3), both provided in shunt to the input terminal of rectifier bridge (4), are to absorb any pulsatile voltage that may arise at its ac side. These elements are used alone or in combination.

The rectifier circuit including smoothing capacitor (6) receives an initial switch-on surge having a relatively large magnitude. The magnitude of an initial switch-on surge that may arise when the ac source is connected at its peak voltage varies with capacitor (6). When its capacitance is very large, the magnitude is calculated by dividing the voltage by the internal resistance of rectifier bridge (4). FIG.2 is illustrative of an initial switch-on surge that flows into capacitor (6) soon after ac source (1) is connected at its positive peak t₀. In the embodiment, inductor (2) provided in series to the input terminal of rectifier bridge (4) effectively limits, as well as this initial switch-on surge, an arc discharge current that may arise when the filament is burned out.

Since smoothing capacitor (6) is usually an electrolytic capacitor having a relatively large capacitance, the surge may reach several ten to several hundred amperes when inductor (2) is omitted. Now supposing that inductor (2) is six millihenries, it exerts an impedance of only 2.26 ohms against 60 hertz ac, but modifies the current across it almost into a square wave having a harmonic because ac source (1) is at its positive peak at this moment. Further supposing that the frequency of the harmonic is 250 hertz, inductor (2) exerts an impedance of 9.4 ohms against the harmonic to limit initial switch-on surge to about 15 amperes (= 140 volts/9.4 ohms) as shown in FIG.2 with the solid line. This value is consistent with that as practically observed.

Now supposing that lamp (7) is burned out during its use, an arc discharge current of up to 200 amperes may flow into lamp (7). This may cause a serious damage to rectifier and switching means. By using six millihenries of inductor (2), the current across rectifier bridge (4) is suppressed to 44 amperes (= 100 volts/2.26 ohms) that is 1/4 to 1/5 of that observed without using inductor (2). Because of this, the use of smoothing or switching means having an unnecessarily high capacity can be omitted according to the invention.

Inductor (2) is a core type- or a coreless type-inductor having an inductance sufficient to limit the surges into lamp (7) when used in the input circuit of the rectifier circuit including smoothing capacitor (6): The core type inductor may be, for example, a wound iron core type- or a stacked iron core type-inductor. The inductance is usually set to a level that limits the surges but unnecessarily drops the voltage across lamp (7), desirably, to a level where the resonance circuit formed together with capacitor (6) advances the phase shift between the voltage and current elements in the surges, in other words, decreases their effective powers. By employing an inductor having a relatively low dc ohm as inductor (2), the surges including initial switch-on surges and arc discharge current are effectively limited without generating an appreciable heat by inductor (2).

In addition to limitation of initial switch-on surges, the present invention is effective in prevention of arc that may arise and continue when the filament is burned out. The present invention is arranged to speedily and automatically limit the arc, so that the damage of rectifier and switching means is avoided. If the arc restores, the inductor kills it, and no arc flashes after the filament gap is extended. If the power switch is on when the arc disappears, it never restores because the filament has been snapped.

As described above, the present invention is characterized in that a lamp is safely dc-operated without cares for surges such as initial switch-on surge and arc discharge current, as well as that the lives of circuit elements including the lamp are extremely prolonged.

## Claims

1. A circuit to limit surges in a dc-operated lamp (7), comprising:
an AC source (1);
a rectifier circuit (4) having smoothing means (6) connected in parallel with its output terminals;
surge-limiting means (8) connected in series with said lamp (7), the series combination of both elements being connected in parallel with the smoothing means (6); and
switching means (9) having the main current path connected in parallel with said surge-limiting means (8), said switching means (9) becoming conductive after a prescribed period of time long enough to permit the filament of said lamp to warm up, so that the switching means (9) short circuits the surge-limiting means (8) to supply the full output of the rectifier circuit to the lamp (7)
characterised in that
the input terminals of the rectifier circuit (4) are connected to the AC source (1) through an inductor (2), said inductor (2) having an impedance sufficient to limit switch-on surges in said smoothing means (6) and also arc discharge currents which may occur when a filament of said lamp (7) burns out.

2. The circuit of claim 1, characterised in that said switching means (9) is a thyristor.

3. The circuit of claim 2, characterised in that said switching means (9) is provided by cascading two thyristors.

4. The circuit of any one of the preceding claims, characterised in that said surge-limiting means (8) is a resistive circuit.

5. The circuit of any one of the preceding claims, characterised in that the impedance of said inductor (2) and the capacitance of said smoothing means (6) are set such that the resonance circuit formed therewith limits arc discharge currents which may occur when the filament of said lamp (7) burns out.

6. The circuit of any one of the preceding claims, characterised in that said inductor (2) is a core type inductor.

## Patentansprüche

1. Schaltung zur Begrenzung von Stromstößen in einer gleichstrombetriebenen Lampe (7), welche aufweist:
eine Wechselspannungsquelle (1);
eine Gleichrichterschaltung (4) mit einer Glättungseinrichtung (6), die parallel zu deren Ausgangsklemmen geschaltet ist;
eine Stromstoß-Begrenzungseinrichtung (8), die in Reihe mit der Lampe (7) geschaltet ist, wobei die Reihenverbindung beider Teile parallel zu der Glättungseinrichtung (6) geschaltet ist; und
eine Schalteinrichtung (9), deren Hauptstromweg parallel zur Stromstoß-Begrenzungseinrichtung (8) geschaltet ist, wobei die Schalteinrichtung (9) nach einer vorbestimmten Zeitspanne leitend wird, die für das Aufwärmen des Fadens der Lampe lang genug ist, so daß die Schalteinrichtung (9) die Stromstoß-Begrenzungseinrichtung (8) kurzschließt, um die volle Ausgangsleistung der Gleichrichterschaltung auf die Lampe (7) zu geben,
dadurch gekennzeichnet, daß
die Eingangsklemmen der Gleichrichterschaltung (4) mit der Wechselspannungsquelle (1) über einen Induktor (2) verbunden sind, wobei der Induktor (2) eine ausreichende Impedanz besitzt, um Einschalt-Stromstöße in der Glättungseinrichtung (6) sowie Bogenentladungsströme zu begrenzen, die beim Durchbrennen des Fadens der Lampe (7) auftreten können.

2. Schaltung nach Anspruch 1, dadurch gekennzeichnet, daß die Schalteinrichtung (9) ein Thyristor ist.

3. Schaltung nach Anspruch 2, dadurch gekennzeichnet, daß die Schalteinrichtung (9) von einer Kaskadenschaltung von zwei Thyristoren gebildet ist.

4. Schaltung nach einem der vorangehenden Ansprüche, dadurch gekennzeichnet, daß die Stromstoß-Begrenzungseinrichtung (8) eine Widerstandsschaltung ist.

5. Schaltung nach einem der vorangehenden Ansprüche, dadurch gekennzeichnet, daß die Impedanz des Induktors (2) und die Kapazitanz der Glättungseinrichtung (6) derart eingestellt sind, daß die damit gebildete Resonanzschaltung Bogenentladungsströme begrenzt, die beim Durchbrennen des Fadens der Lampe (7) auftreten können.

6. Schaltung nach einem der vorangehenden Ansprüche, dadurch gekennzeichnet, daß der Induktor (2) ein Induktor mit einem Kern ist.

## Revendications

1. Circuit pour limiter les surintensités dans une lampe fonctionnant au courant continu (7), comprenant :
une source CA (1) ;
un circuit redresseur (4) comportant un moyen de filtrage (6) connecté en parallèle avec ses bornes de sortie ;
un moyen de limitation de surintensité (8) connecté en série avec ladite lampe (7), la combinaison en série des deux éléments étant connectée en parallèle avec le moyen de filtrage (6) ; et
un moyen de commutation (9) présentant le trajet de courant principal connecté en parallèle avec ledit moyen de limitation de surintensité (8), ledit moyen de commutation (9) devenant conducteur après une période de temps prescrite suffisamment longue pour permettre au filament de ladite lampe de chauffer, de façon que le moyen de commutation (9) mette en court-circuit le moyen de limitation de surintensité (8) pour fournir la sortie totale du circuit redresseur à la lampe (7)
caractérisé en ce que
les bornes d'entrée du circuit redresseur (4) sont connectées à la source CA (1) à travers un inducteur (2), ledit inducteur (2) possédant une impédance suffisante pour limiter les surintensités à l'allumage dans ledit moyen de filtrage (6) et également les courants de décharge en arc qui peuvent se produite lorsqu'un filament de ladite lampe (7) grille.

2. Circuit selon la revendication 1, caractérisé en ce que ledit moyen de commutation (9) est un thyristor.

3. Circuit selon la revendication 2, caractérisé en ce que ledit moyen de commutation (9) est fourni en montant en cascade deux thyristors.

4. Circuit selon l'une quelconque des revendication précédentes, caractérisé en ce que ledit moyen de limitation de surintensité (8) est un circuit résistif.

5. Circuit selon l'une quelconque des revendications précédentes, caractérisé en ce que l'impédance dudit inducteur (2) et la capacité dudit moyen de filtrage (6) sont établis de façon telle que le circuit de résonance formé avec eux limite les courants de décharge en arc qui peuvent se produire quand le filament de ladite lampe (7) grille.

6. Circuit selon l'une quelconque des revendications précédentes, caractérisé en ce que l'inducteur (2) est un inducteur du type à noyau.
